# EUROPÄISCHE PATENTSCHRIFT

(11) **EP 3 724 470 B1**
(45) Veröffentlichungstag und Bekanntmachung des Hinweises auf die Patenterteilung: **23.02.2022**
(21) Anmeldenummer: 18826974.0
(22) Anmeldetag: 07.12.2018
(51) Int. Cl.: F01N 13/18, F16L 23/08, F16L 23/18

(54) **ANORDNUNG UND VERFAHREN ZUM VERBINDEN FLUIDLEITENDER BAUTEILE, INSBESONDERE IM ABGASSTRANG EINES KRAFTFAHRZEUGS**
ARRANGEMENT AND METHOD FOR CONNECTING FLUID-CONDUCTING COMPONENTS, MORE PARTICULARLY IN THE EXHAUST GAS LINE OF A MOTOR VEHICLE
AGENCEMENT ET PROCÉDÉ DE RACCORDEMENT DE COMPOSANTS CONDUCTEURS DE FLUIDE, EN PARTICULIER DANS LE SYSTÈME D'ÉCHAPPEMENT D'UN VÉHICULE AUTOMOBILE

(30) Priorität: 11.12.2017 DE 102017222383
(43) Veröffentlichungstag der Anmeldung: 21.10.2020
(73) Patentinhaber: Audi AG, 85045 Ingolstadt (DE); VOLKSWAGEN AG, 38440 Wolfsburg (DE)
(72) Erfinder: TANGERMANN, Sönke Andreas, 74869 Schwarzach (DE); MORSCH, Holger, 74861 Neudenau (DE); SEIDL, Bertram, 86697 Oberhausen an der Donau (DE); CAR, Onur Ulas, 10115 Berlin (DE); SCHLOTHAUER, Janet, 38486 Klötze (DE)
(74) Vertreter: Raible Deissler Lehmann Patentanwälte PartG mbB
(86) Internationale Anmeldenummer: PCT/EP2018/083993
(87) Internationale Veröffentlichungsnummer: WO 2019/115390

(56) Entgegenhaltungen:
- DE-A1-102011 108 441
- DE-A1-102016 103 687
- FR-A1- 2 906 864
- FR-A3- 2 925 648
- US-A1- 2006 202 480
- US-A1- 2011 277 466

## Beschreibung

Die Erfindung betrifft eine Anordnung zum Verbinden eines ersten fluidleitenden Bauteils mit einem zweiten fluidleitenden Bauteil, insbesondere im Abgasstrang eines Kraftfahrzeugs, mit einer Dichtung, welche die Bauteile an der Verbindungsstelle abdichtet, und mit einer die Bauteile an der Verbindungsstelle umschlingenden Spannschelle, welche die Bauteile aneinander befestigt. Zur Anordnung gehören neben den beiden Bauteilen auch die insbesondere als Ringdichtung ausgebildete Dichtung und die Spannschelle.

Die Erfindung betrifft ferner ein Verfahren zum Verbinden eines ersten fluidleitenden Bauteils mit einem zweiten fluidleitenden Bauteil, insbesondere im Abgasstrang eines Kraftfahrzeugs.

Ein fluidleitendes Bauteil im Sinne der Erfindung ist bspw. eine Rohrleitung (auch ein Flexrohr), eine Schlauchleitung, ein Gehäuse (z. B. ein Turboladergehäuse oder ein Auspufftopf), eine Armatur (z. B. ein Ventil), ein Adapter und dergleichen, durch das ein Fluid, insbesondere ein Abgas einer Verbrennungskraftmaschine, durchgeleitet wird. Insbesondere handelt es sich um abgasführende Bauteile einer Abgasanlage bzw. einer Abgasführungseinrichtung an einem Kraftfahrzeug.

Die DE 10 2015 215 975 A1 beschreibt einen Abgasstrang eines Fahrzeuges, umfassend einen ersten, abgasführenden Abschnitt, einen zweiten, abgasführenden Abschnitt, und eine Bandschelle, die die beiden Abschnitte miteinander verbindet.

Die Druckschrift DE 10 2016 103 687 A1 beschreibt eine Profilschelle mit einem Profilband und einem ringförmigen Dichtelement, wobei das Profilband zwei Spannköpfe aufweist, die über ein Spannelement miteinander verbunden sind, wobei das Dichtelement eine radial nach außen abstehende Haltelasche aufweist, die an dem Spannelement gehalten ist. Dabei erstreckt sich die Haltelasche in einem Bereich zwischen den Spannköpfen und ist von außen gut sichtbar.

Eine Klammeranordnung für Rohre ist aus der Druckschrift US 2006/202480 A1 bekannt.

Eine wasserdichte Befestigung für Rohre ist in der Druckschrift FR 2 925 648 A3 beschrieben.

Die Druckschrift FR 2 906 864 A1 beschreibt eine Verbindung für Rohre.

In der Druckschrift US 2011/277466 A1 ist eine Abgasanlage beschrieben, bei der ein Turbinengehäuse und ein Abgassystem miteinander verbunden werden. Hierzu werden eine Schelle und eine Schraube verwendet. Dabei umschließt die Schelle sowohl ein Ende des Turbinengehäuses als auch ein Ende des Abgassystems. Ferner ist an dem Turbinengehäuse ein Arm und an dem Abgassystem eine Klammer angeordnet, wobei der Arm und die Klammer als zusätzliche Befestigungsmodule über die Schraube miteinander verbunden sind.

Ein Dichtungselement ist aus der Druckschrift DE 10 2011 108 441 A1 bekannt.

Nach der Montage der Klemm- bzw. Spannschelle kann nicht mehr geprüft werden, ob eine Dichtung montiert wurde. Falls Zweifel bestehen, muss die Verbindung wieder demontiert werden. Eine Aufgabe der Erfindung ist es, hierfür Abhilfe zu schaffen.

Die Aufgabe wird gelöst durch die Gegenstände der unabhängigen Patentansprüche. Weiterbildungen und Ausgestaltungen der Erfindung ergeben sich analog für alle Erfindungsgegenstände aus den abhängigen Patentansprüchen, der nachfolgenden Beschreibung und der Zeichnung.

Bei der erfindungsgemäßen Anordnung ist die Dichtung mit (wenigstens) einem Fähnchen ausgebildet, welches bei verbundenen Bauteilen bzw. nach dem Verbinden der Bauteile, d. h. im montierten Zustand, an der Verbindungsstelle (nach außen) hervorsteht bzw. aus der Verbindungsstelle zwischen den verbundenen Bauteilen herausragt, und durch eine Trennfuge der Spannschelle sichtbar ist.

Die erfindungsgemäße Anordnung ist dadurch gekennzeichnet, dass eines der Bauteile, insbesondere das zweite Bauteil, an seinem zu verbindenden Ende bzw. an seinem Anschlussabschnitt mit einem Dorn oder dergleichen ausgebildet ist, und dass die Spannschelle mit einer Nase oder dergleichen ausgebildet ist, wobei der Dorn am Bauteil und die Nase an der Spannschelle einen Drehanschlag bzw. Verdrehanschlag für die Spannschelle bilden und dadurch die Spannschelle in Umfangsrichtung genau positioniert werden kann bzw. positionierbar ist.

Anhand des sichtbaren Fähnchens kann immer nachvollzogen werden, ob die Dichtung montiert wurde. Ein Fähnchen ist insbesondere in kleinflächiges (z. B. < 1 cm²), blattartiges Element, das radial und/oder axial vom Dichtungskörper, insbesondere ein Dichtungsring, abragt. Das Fähnchen hat keinen Einfluss auf die Abdichtung zwischen den Bauteilen und soll insbesondere nur eine Sicht- bzw. Erkennungsfunktion erfüllen. Das Fähnchen kann farbig markiert sein und bspw. mit einer gängigen Signalfarbe versehen sein, damit dieses auch bei schlechten Lichtverhältnissen erkennbar ist.

Die Trennfuge ist der Spalt bzw. die Öffnung zwischen den beiden Enden bzw. Ringenden der Spannschelle. Bevorzugt weist die Spannschelle an der Trennfuge eine einzelne Spannschraube auf, welche die beiden Enden des in der Regel ringförmig ausgebildeten Schellenbands verbindet, sodass durch Verdrehen der Spannschraube der Umfang bzw. Durchmesser der Spannschelle veränderbar ist. Bevorzugt ist diese Spannschraube so angeordnet ist, dass die Trennfuge einsehbar ist.

Die beiden Bauteile sind an ihren zu verbindenden Enden bzw. Anschlussabschnitten bevorzugt mit T-Flanschen bzw. Ringflanschen ausgebildet und die Spannschelle ist bevorzugt als Hohlband- und insbesondere als V-Bandschelle ausgebildet, welche die T-Flansche übergreift.

Bevorzugt ist vorgesehen, dass eines der Bauteile, insbesondere das erste Bauteil, an seinem zu verbindenden Ende bzw. an seinem Anschlussabschnitt mit einer Nut oder dergleichen ausgebildet ist, und dass die Dichtung mit einer Nase oder dergleichen ausgebildet ist, wobei die Nase an der Dichtung exakt in die Nut am Bauteil passt und dadurch die Dichtung in Umfangsrichtung genau positioniert werden kann bzw. positionierbar ist.

Durch die beiden vorausgehend erläuterten Maßnahmen können bei der Montage die Dichtung und die Spannschelle in Umfangsrichtung positioniert bzw. ausgerichtet werden, d. h. die Nut, der Dorn und die Nasen sind Positioniermittel bzw. -hilfen. Damit werden die Dichtung und die Spannschelle in Umfangsrichtung auch relativ zueinander positioniert bzw. ausgerichtet, sodass gewährleistet wird, dass das Fähnchen durch die Trennfuge der Spannschelle sichtbar ist.

Bevorzugt ist die Dichtung, einschließlich des Fähnchens und gegebenenfalls der Nase, einstückig ausgebildet. Die Dichtung kann ein einstückiges, aus Blech gefertigtes Stanz-Umformteil sein. Die Dichtung kann auch einstückig aus Kunststoff oder Verbundmaterial gefertigt sein.

Das erfindungsgemäße Verfahren zum Verbinden eines ersten fluidleitenden Bauteils mit einem zweiten fluidleitenden Bauteil, insbesondere im Abgasstrang eines Kraftfahrzeugs, umfasst die Schritte:
- Bereitstellen des ersten fluidleitenden Bauteils und des zweiten fluidleitenden Bauteils, die gegebenenfalls schon im Kraftfahrzeug eingebaut oder vormontiert sind;
- Herstellen einer erfindungsgemäßen Anordnung zum fluidleitenden Verbinden dieser beiden Bauteile, wobei insbesondere die Dichtung und die Spannschelle relativ zueinander ausgerichtet werden, wie vorausgehend erläutert;
- visuelle Prüfung bzw. Sichtprüfung, ob das Fähnchen der Dichtung durch die Trennfuge der Spannschelle sichtbar ist, wobei diese Prüfung jederzeit (bspw. auch in einer Werkstatt) manuell oder automatisch erfolgen kann.

Die Erfindung wird bevorzugt für den Abgasstrang bzw. die Abgasanlage eines Kraftfahrzeugs verwendet, insbesondere zum Verbinden bzw. für die Verbindung von Katalysator und Partikelfilter oder Partikelfilter und AGR-Kühler oder zur Turboladerverbindung.

Die Erfindung wird nachfolgend anhand der Zeichnung näher erläutert. Die in den Figuren der Zeichnung gezeigten und/oder nachfolgend erläuterten Merkmale können, auch unabhängig von bestimmten Merkmalskombinationen, allgemeine Merkmale der Erfindung sein und die Erfindung entsprechend weiterbilden.
- Fig. 1: zeigt in einer perspektivischen Darstellung eine erfindungsgemäße Anordnung vor dem Verbinden.
- Fig. 2: zeigt in einer anderen perspektivischen Darstellung die erfindungs-gemäße Anordnung beim Verbinden.

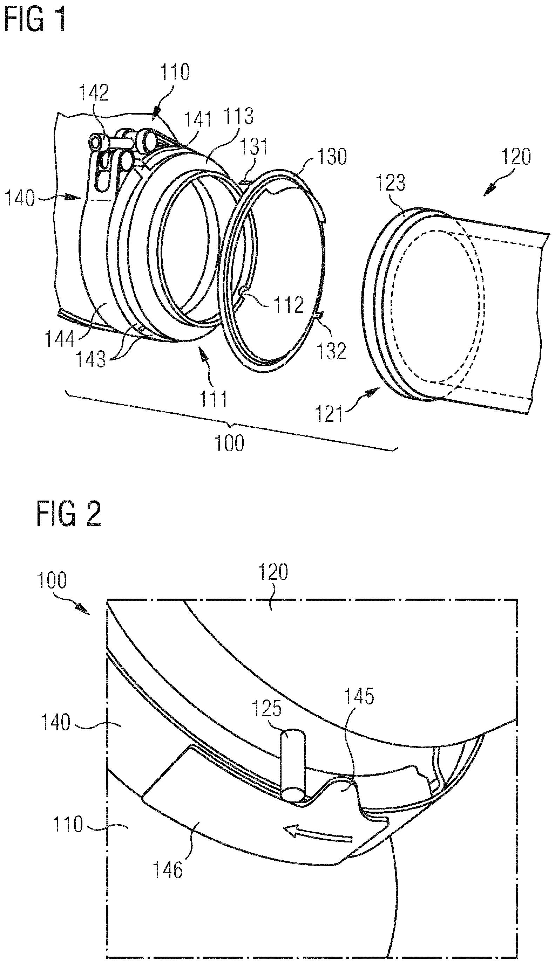

Fig. 1 zeigt eine erfindungsgemäße Anordnung 100 zum fluidleitenden Verbinden eines ersten fluidleitenden Bauteils 110 mit einem zweiten fluidleitenden Bauteil 120, wobei es sich insbesondere um Bauteile im Abgasstrang eines Kraftfahrzeugs handelt. Zur Anordnung 100 gehören neben den beiden Bauteilen 110, 120 auch eine als Ringdichtung ausgebildete Dichtung 130 und eine Spannschelle 140. Die Spannschelle 140 weist eine Trennfuge 141 auf, an der radial nach außen versetzt eine Spannschraube 142 angeordnet ist. Die Bandschelle 140 ist als V-Bandschelle ausgebildet und weist mehrere im Querschnitt V-förmige Profilsegmente 143 auf, die (innenseitig) an einem mit der Spannschraube 142 spannbaren Außenband 144 angeschweißt sind.

Die einstückige Dichtung 130 ist mit einem Fähnchen 131 ausgebildet, welches nach dem Verbinden der Bauteile 110, 120, also im montierten Zustand der Anordnung 100, an der Verbindungsstelle hervorsteht, d. h. aus den verbundenen Bauteilen 110, 120 herausragt, und durch die Trennfuge 141 der Spannschelle 140 sichtbar ist. Das Fähnchen 131 ist also auch noch nach der Montage weiterhin sichtbar. Somit ist durch einfache Sichtprüfung erkennbar, ob beim Verbinden der beiden Bauteile 110, 120 eine Dichtung 130 eingebaut wurde. Die radial nach außen versetzte Spannschraube 142 ermöglicht eine gute Einsicht in die darunterliegende Trennfuge 141.

Die Dichtung 130 ist ferner mit einer laschenartigen Nase 132 (erste Nase) ausgebildet und das erste Bauteil 110 ist an seinem zu verbindenden Ende bzw. an seinem Anschlussabschnitt 111 mit einer korrespondierenden Nut bzw. Ausnehmung 112 ausgebildet. Die Nase 132 passt genau in die Nut 112, sodass die Dichtung 130 beim Aufsetzen auf den Anschlussabschnitt 111 in Umfangsrichtung genau positioniert werden kann. Das Fähnchen 131 nimmt damit in Umfangsrichtung eine definierte Position ein.

Wie aus Fig. 2 ersichtlich, ist das zweite Bauteil 120 an seinem zu verbindenden Ende bzw. an seinem Anschlussabschnitt 121 mit einem radial abragenden Dorn bzw. Dom 125 ausgebildet und die Spannschelle 140 ist mit einer laschenartigen Nase 145 (zweite Nase) ausgebildet. Die Nase 145 ist Bestandteil eines (außenseitig) mit dem Außenband 144 verschweißten Aufsatzstücks 146. Der Dorn 125 und die Nase 145 bilden einen Drehanschlag für die Spannschelle 140. Beim Spannen der Spannschelle 140, nachdem diese über beide T-Flansche 113, 123 geschoben wurde, wird mit dem an der Spannschraube 142 angesetzten Schraubwerkzeug eine in Umfangsrichtung wirkende Kraft auf die Spannschelle 140 ausgeübt, wodurch diese in Umfangsrichtung verdreht wird, wie durch den Pfeil veranschaulicht, bis die Nase 145 am Dorn 125 anschlägt. Damit ist auch die Spannschelle 140 in Umfangsrichtung genau positioniert und die Trennfuge 141 hat in Umfangsrichtung eine definierte Position.

Sozusagen wird die Dichtung 130 am ersten Bauteil 110 und die Spannschelle 140 am zweiten Bauteil 120 ausgerichtet, mit dem Ziel, dass sich die Trennfuge 141 und das Fähnchen 131 in Umfangsrichtung überdecken. Die Dichtung 130 und die Spannschelle 140 können in analoger Weise auch nur am ersten Bauteil 110 oder nur am zweiten Bauteil 120 ausgerichtet werden.

## Patentansprüche

1. Anordnung (100), zu der ein erstes und ein zweites fluidleitendes Bauteil (110, 120) und eine Dichtung (130) gehören, zum Verbinden des ersten fluidleitenden Bauteils (110) mit dem zweiten fluidleitenden Bauteil (120), insbesondere im Abgasstrang eines Kraftfahrzeugs, mit der Dichtung (130), welche die Bauteile (110, 120) an der Verbindungsstelle abdichtet, und mit einer die Bauteile (110, 120) an der Verbindungsstelle umschlingenden Spannschelle (140), welche die Bauteile (110, 120) aneinander befestigt, wobei die Dichtung (130) mit einem Fähnchen (131) ausgebildet ist, welches nach dem Verbinden der Bauteile (110, 120) an der Verbindungsstelle hervorsteht und durch eine Trennfuge (141) der Spannschelle (140) sichtbar ist,
**dadurch gekennzeichnet, dass**
das zweite Bauteil (120) an seinem zu verbindenden Ende (121) mit einem radial abragenden Dorn (125) ausgebildet ist und die Spannschelle (140) mit einer laschenartigen Nase (145) ausgebildet ist, wobei der Dorn (125) und die Nase (145) einen Drehanschlag bilden und dadurch die Spannschelle (140) in Umfangsrichtung genau positioniert werden kann.

2. Anordnung (100) nach Anspruch 1,
**dadurch gekennzeichnet, dass**
das Fähnchen (131) farbig markiert ist.

3. Anordnung (100) nach Anspruch 1 oder 2,
**dadurch gekennzeichnet, dass**
die Spannschelle (140) an der Trennfuge (141) eine einzelne Spannschraube (142) aufweist, die so angeordnet ist, dass die Trennfuge (141) einsehbar ist.

4. Anordnung (100) nach einem der vorausgehenden Ansprüche,
**dadurch gekennzeichnet, dass**
das erste Bauteil (110) an seinem zu verbindenden Ende (111) mit einer Nut (112) ausgebildet ist und die Dichtung (130) mit einer Nase (132) ausgebildet ist, wobei die Nase (132) genau in die Nut (112) passt und dadurch die Dichtung (130) in Umfangsrichtung genau positioniert werden kann.

5. Anordnung (100) nach einem der vorausgehenden Ansprüche,
**dadurch gekennzeichnet, dass**
beide Bauteile (110, 120) mit T-Flanschen (113, 123) ausgebildet sind und die Spannschelle (140) eine V-Bandschelle ist.

6. Anordnung (100) nach einem der vorausgehenden Ansprüche,
**dadurch gekennzeichnet, dass**
die Dichtung (130) einstückig ausgebildet ist.

7. Verfahren zum Verbinden eines ersten fluidleitenden Bauteils (110) mit einem zweiten fluidleitenden Bauteil (120), insbesondere im Abgasstrang eines Kraftfahrzeugs, mit den Schritten:
- Bereitstellen des ersten fluidleitenden Bauteils (110) und des zweiten fluidleitenden Bauteils (120);
- Herstellen einer Anordnung (100) gemäß einem der vorausgehenden Ansprüche 1 bis 6;
- visuelle Prüfung, ob das Fähnchen (131) der Dichtung (130) durch die Trennfuge (141) der Spannschelle (140) sichtbar ist.

## Claims

1. An arrangement (100), to which belong a first and a second fluid-conducting component (110, 120), and a seal (130), for connecting the first fluid-conducting component (110) to the second fluid-conducting component (120), especially in the exhaust gas line of a motor vehicle, with the seal (130), which seals the components (110, 120) at the connection point, and with a band clamp (140) enclosing the components (110, 120) at the connection point, which band clamp fastens the components (110, 120) to one another, wherein the seal (130) is formed with a tab (131) that protrudes at the connection point after the components (110, 120) have been connected and which is visible through a separation gap (141) of the band clamp (140), **characterized in that**
the second component (120) is formed with a radially projecting pin (125) at its end to be connected (121) and the band clamp (140) is formed with a flap-like lug (145), wherein the pin (125) and the lug (145) form a rotation stop and by this means, the band clamp (140) can be positioned exactly in the circumferential direction.

2. The arrangement (100) according to claim 1, **characterized in that** the tab (131) is colored.

3. The arrangement (100) according to claim 1 or 2, **characterized in that**
the band clamp (140) has a single tensioning screw (142) at the separation gap (141), which tensioning screw (142) is arranged such that the separation gap (141) is visible.

4. The arrangement (100) according to any one of the preceding claims, **characterized in that**
the first component (110) is formed with a groove (112) at its end to be connected (111) and the seal (130) is formed with a tongue (132), wherein the tongue (132) fits exactly into the groove (112) and by this means, the seal (130) can be positioned exactly in the circumferential direction.

5. The arrangement (100) according to any one of the preceding claims, **characterized in that**
both components (110, 120) are formed with T-flanges (113, 123) and the band clamp (140) is a V-band clamp.

6. The arrangement (100) according to any one of the preceding claims, **characterized in that**
the seal (130) is formed as a single piece.

7. A process for connecting a first fluid-conducting component (110) to a second fluid-conducting component (120), especially in the exhaust gas line of a motor vehicle, with the steps:
- providing the first fluid-conducting component (110) and the second fluid-conducting component (120);
- manufacturing an arrangement (100) according to any one of the preceding claims 1 to 6;
- visual inspection to ascertain whether the tab (131) of the seal (130) is visible through the separation gap (141) of the band clamp (140).

## Revendications

1. Agencement (100) comprenant un premier et un second composant (110, 120) conducteur de fluide et un joint d'étanchéité (130) pour relier le premier composant (110) conducteur de fluide avec le second composant (120) conducteur de fluide, en particulier dans le système d'échappement d'un véhicule automobile, comportant le joint d'étanchéité (130) étanchant les composants (110, 120) au point de connexion et un collier (140) encerclant les composants (110, 120) au point de connexion et fixant les composants (110, 120) entre eux, le joint d'étanchéité (130) étant équipé d'une étiquette (131) faisant saillie après la connexion des composants (110, 120) au point de connexion et étant visible à travers un joint de séparation (141) du collier (140), **caractérisé en ce que**
le second composant (120) est doté d'un mandrin (125) en saillie radiale à son extrémité (121) à connecter et que le collier (140) est doté d'un ergot (145) en forme de languette, le mandrin (125) et l'ergot (145) formant une butée rotative, ce qui permet au collier (140) d'être positionné précisément dans le sens circonférentiel.

2. Agencement (100) selon la revendication 1,
**caractérisé en ce que**
l'étiquette (131) est marquée en couleur.

3. Agencement (100) selon la revendication 1 ou 2,
**caractérisé en ce que**
le collier (140) présente une seule vis de serrage (142) sur le joint de séparation (141), la vis étant conçue de manière à ce que le joint de séparation (141) soit accessible.

4. Agencement (100) selon l'une des revendications précédentes, **caractérisé en ce que**
le premier composant (110) est équipé d'une rainure (112) à son extrémité (111) à connecter et que le joint d'étanchéité (130) est doté d'un ergot (132), ledit ergot (132) s'introduisant précisément dans la rainure (112), ce qui permet au joint d'étanchéité (130) d'être positionné avec précision dans le sens circonférentiel.

5. Agencement (100) selon l'une des revendications précédentes, **caractérisé en ce que**
les deux composants (110, 120) sont dotés de brides en T (113, 123) et que le collier (140) est un collier de serrage en V.

6. Agencement (100) selon l'une des revendications précédentes, **caractérisé en ce que**
le joint d'étanchéité (130) est réalisé d'un seul tenant.

7. Procédé de raccordement d'un premier composant (110) conducteur de fluide avec un second composant (120) conducteur de fluide, en particulier dans le système d'échappement d'un véhicule automobile, comportant les étapes suivantes :
- la mise à disposition du premier composant (110) conducteur de fluide et du second composant (120) conducteur de fluide ;
- la réalisation d'un agencement (100) selon l'une des revendications précédentes 1 à 6 ;
- l'examen visuel pour déterminer si l'étiquette (131) du joint d'étanchéité (130) est visible à travers le joint de séparation
